# EUROPEAN PATENT APPLICATION

(11) **EP 3 671 504 A1**
(43) Date of publication of application: **24.06.2020**
(21) Application number: 18306725.5
(22) Date of filing: 18.12.2018
(51) Int. Cl.: G06F 21/34, G06F 21/32, B42D 25/23, G06K 9/00

(54) **AN ELECTRONIC IDENTITY DOCUMENT COMPRISING A NON-REMOVABLE SECURE ENCLAVE IMPLEMENTING AN INFERENCE ENGINE AND A MACHINE LEARNING MODEL**

(71) Applicant: Thales Dis France SA, 92190 Meudon (FR)
(72) Inventor: JACQUEMIN, Olivier, 92190 Meudon (FR); PAILLART, Frédéric, 92190 Meudon (FR); GEORGE, Patrick, 92190 Meudon (FR)
(74) Representative: Cassagne, Philippe M.J.

(57) **Abstract**

This invention relates to an electronic identity document (301) comprising a non-removable secure enclave (330) implementing an inference engine (331) and a machine learning model (332), the inference engine (331) being configured to cooperate with the machine learning model (332) for authenticating a first individual called legitimate individual uniquely associated to the electronic identity document (301), the machine learning model (332) being trained using a trusted dataset representative of at least one attribute of the legitimate person before being provisioned in the secure enclave (330) for binding the electronic identity document (301) with the legitimate individual, the secure enclave (330) being further configured to receive an authentication input dataset representative of at least one attribute provided by a second individual, the authentication input dataset being used as an input by the secure enclave (330) to provide as an output at least one data item comprising the result of an authentication process carried out by applying the inference engine (331) and the machine learning model (332) to the authentication input dataset.

## Description

### TECHNICAL FIELD

The present invention relates to an electronic identity document comprising a non-removable secure enclave implementing an inference engine and a machine learning model. It is applicable to the technical domain of artificial intelligence applied to authentication techniques.

### BACKGROUND OF THE INVENTION

Electronic identity documents are used for the identification of individuals. They communicate with a terminal able to extract data from the document to compare it with the individual. As an example, facial recognition is used with passports at airport. However, those documents are currently not able to identify themselves a person. The Electronic identity document provides stored information to another device that is in charge of performing the identification.

An electronic identity document can be implemented such that it comprises a secure element. A secure element is a component comprising a memory, a microprocessor and an operating system for computing treatments. Such secure element may comprise a plurality of memories of different types. It is called "secure" because it is able to control the access to the data they contain and to authorize or not the use of data by other machines. The secure elements may also provide computation services based on cryptographic components. Secure elements may be removable or fixed to a host device. When a secure element is implemented in an electronic identity document, it is generally fixed to it, that is to say non-removable.

The information today stored inside the secure element of the electronic identity document is quite poor. It is close to what is printed on the electronic identity document itself. As an example, a poor-quality photo of the individual can be memorized in this secure element. As a consequence of this lack of information details, recognition capacity is weak.

Increasing the amount of information stored in the electronic identity document compared to what is printed on the electronic identity document could be a solution to improve the recognition capability. For example, it could be a full 3D scan of the individual. But this increase of stored information will also lead to a risk of sensitive information leakage and so to a higher risk of identity spoofing in case of loss or theft of the Electronic identity document. This is because the electronic identity document exposes an interface to deliver the stored information for external processing.

Most of the existing electronic identity document are acting as a secure storage media. It ensures the integrity and the authenticity of the information used for the identification of an individual, but not the confidentiality of this information. The processing of the stored information is done out of the secure element, either by an officer in charge of comparing this information with the individual himself, or either by a matching algorithm in charge of doing such comparison. This algorithm is so generic, having to work from any electronic identity document to any Individual. Such generic algorithm, matching an infinite set of data with an infinite set of individuals is hard to build and is error-prone.

More advanced electronic identity document can perform match-on-card. In other words, they can perform the matching internally. However, the matching algorithm is static and the matching performance cannot be improved. Only thresholds can be updated but this directly affects the recognition accuracy, therefore the overall system security.

### SUMMARY OF THE INVENTION

This invention related to an electronic identity document comprising a non-removable secure enclave implementing an inference engine and a machine learning model, the inference engine being configured to cooperate with the machine learning model for authenticating a first individual called legitimate individual uniquely associated to the electronic identity document, the machine learning model being trained using a trusted dataset representative of at least one attribute of the legitimate person before being provisioned in the secure enclave for binding the electronic identity document with the legitimate individual, the secure enclave being further configured to receive an authentication input dataset representative of at least one attribute provided by a second individual, the authentication input dataset being used as an input by the secure enclave to provide as an output at least one data item comprising the result of an authentication process carried out by applying the inference engine and the machine learning model to the authentication input dataset.

According to an example, the trusted dataset and the authentication input dataset comprise data representative of at least a biometric attribute belonging respectively to the first and second individuals.

According to an example, the machine learning model is trained using a trusted dataset provided by an acquisition system adapted to capture and/or collect data representative to at least one attribute of the legitimate individual.

According to an example, the secure enclave comprises a one-time programmable memory defining a state, this state being changed once the machine learning model is provisioned in the secure enclave.

According to an example, the trusted dataset comprise at least one data item corresponding to one or several of the following information: one or digital images of the legitimate individual or sound recordings corresponding to the voice of the legitimate individual.

According to an example, the electronic identity document is configured to receive from a personalization centre a machine learning model trained with a trusted dataset of the legitimate user, said machine learning model being received together with a unique request identifier generated by the personalization centre, said unique request identifier being later provided as an output together with the data item comprising the result of an authentication process, a supervision system being adapted to compare the unique request identifier generated by the personalization centre and the unique request identifier transmitted by the electronic identity document together with the authentication result.

According to an example, the secure enclave is configured to generate an electronic signature to be transmitted together with the the result of an authentication process to a supervision system, the authentication being considered successful if the authentication result is positive and if the electronic signature is correctly verified by the supervision system.

According to an example, the electronic signature is generated by the secure enclave using as an input one or several of the following dataset:
- the authentication input dataset;
- a computation derived from the authentication input dataset;
- the unique request identifier;
- the inference authentication result.

According to an example, the secure enclave is a secure element.

According to an example, the machine learning model is trained using several different authentication factors for enabling multimodal authentication.

According to an example, the machine learning model is a neural network.

According to an example, the information transmitted by the personalization centre to the secure enclave corresponds to a set of weight allowing to configure the neural network.

The invention also relates to a secure enclave adapted to be installed as a non-removable secure enclave of an electronic identity document, said secure enclave comprising an inference engine and a machine learning model, the inference engine being configured to cooperate with the machine learning model for authenticating a first individual called legitimate individual uniquely associated to the electronic identity document, the machine learning model being trained using a trusted dataset representative of at least one attribute of the legitimate person before being provisioned in the secure enclave for binding the electronic identity document with the legitimate individual, the secure enclave being further configured to receive an authentication input dataset representative of at least one attribute provided by a second individual, the authentication input dataset being used as an input by the secure enclave to provide as an output at least one data item comprising the result of an authentication process carried out applying the inference engine and the machine learning model to the authentication input dataset.

### BRIEF DESCRIPTION OF THE DRAWINGS

Additional features and advantages of the invention will be more clearly understandable after reading a detailed description of several embodiments of the invention, given as an indicative and non-limitative example, in conjunction with the following drawings:
- Figure 1 represents schematically three phases that can be carried by a system enabling secure authentication of an individual based on the use of an electronic identity document;
- Figure 2 illustrates the enrolment phase and the personalisation phase that are carried out in an authentication system based on the use of an electronic identity document comprising an embedded machine learning model;
- Figure 3 illustrates the individual authentication phase that is carried out in an authentication system based on the use of an electronic identity document with an embedded machine learning model.

### DETAILED DESCRIPTION

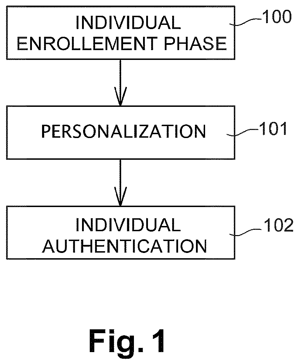

**Figure 1** represents schematically three phases that can be carried by a system enabling secure authentication of an individual based on the use of an electronic identity document.

The system that is described hereinafter is based on the use of an electronic identity document comprising a secure element. This electronic identity document aims at authenticating an individual for whom it is issued.

Despite the fact that the description mentions the use of a secure element implemented in the electronic identity document, those skilled in the art will appreciate that the invention is applicable to any electronic identity document comprising a secure enclave. A secure enclave refers to a secure area that is adapted to store data and to protect their integrity and confidentiality and comprising a set of at least one hardware and/or software components. This secure enclave can be implemented for example into a processor in the form of a Trusted Execution Environment (TEE) or as a secure element embedded in a system or integrated in a System-on-Chip (SoC). A secure element is a particular example of a secure enclave.

Further, the expression electronic identity document refers to any device comprising one or several electronic components and having the function to authenticate or to render the authentication of a legitimate user possible. Examples of electronic identity documents are ePasseports, electronic driving licenses, or smartphone embedding a secure application enabling authentication of an individual.

One important aspect of the invention is that the electronic identity document is able to authenticate by itself a genuine individual. For that purpose, the secure element is provisioned by a machine learning model conjured specifically for authenticating the genuine individual.

The first phase 100 of the described technology corresponds to an individual enrolment phase during which a trusted dataset is captured from an individual to whom the electronic identity document is to be issued.

The second phase 101 corresponds to a so-called personalization phase. The aim of this phase is to generate a machine learning model based on the trusted dataset captured during the first phase 100 and to provision securely this machine learning model into the secure element.

The third phase 102 corresponds to the authentication process applied for a given individual. According to one important aspect of the invention, this authentication process is carried out by the electronic identity document using an inference engine configured to cooperate with the machine learning model provisioned in the secure element during the personalization phase.

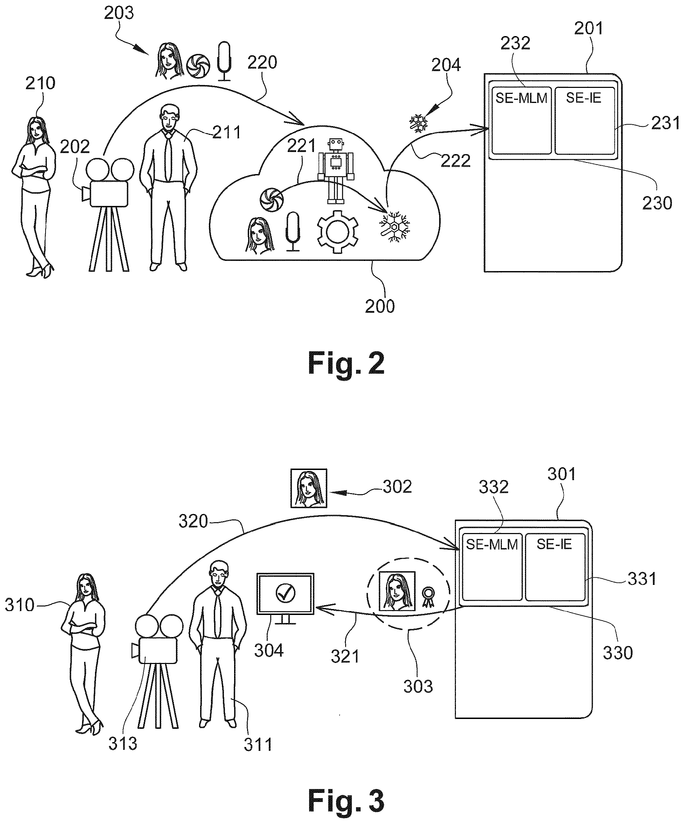

**Figure 2** illustrates the enrolment phase and the personalisation phase that are carried out in an authentication system based on the use of an electronic identity document comprising an embedded machine learning model.

An acquisition system 202 is used to capture and collect data items related to an identified individual. Those data items correspond for example to one or several of the following information: one or digital images of the individual, sound recordings corresponding for example to the voice of the individual, any other information in order to build a trusted dataset comprising one or several data items related to an individual.

Then, a personalization centre 200 is used to collect from a civil service or any trusted organization a trusted dataset related to an identified individual and to train a machine learning model. This machine learning model is generated from the trusted dataset of one identified individual and is intended for this identified individual only.

The system also comprises an electronic identity document 201. The electronic identity document 201 embeds a secure element (SE) 230.

This secure element 230 comprises an inference engine 231. The inference engine 231 can be defined as a set of inference rules applicable to a machine learning model acting as a knowledge base. The aim of applying these rules is to deduce new information, and in this particular example, to provide the result of an authentication process. Said differently, the inference engine 231 is a processing unit adapted to perform the inference of a machine learning model 232.

The secure element 230 of the electronic identity document 201 is further configured to embed a machine learning model 231. A machine learning model is a functional component aiming as memorizing complex structured and unstructured information allowing the inference model 230 to recognize an input dataset captured or acquired from an individual.

According to an embodiment, the machine learning model is a neural network.

The person skilled in the art will understand that other type of machine learning model can also be used. For example, the machine learning model can be decision tree model.

During the individual enrolment phase 100, the acquisition system 202 can be operated in a trusted organisation by an employee 211 of this organization in order to collect a trusted dataset for an identified individual, that is to say an individual previously authenticated by the employee. Next, the trusted dataset 203 is transmitted 220 through a secure channel up to the personalization centre 200.

During the personalization phase 101, the personalization centre 200 builds 221 from the trusted dataset a dedicated machine learning model. It is said dedicated as it is generated for a single individual and is configured to authenticate this single individual only. This machine learning model 204 is then transmitted 222 to the electronic identity document 201 for being provisioned 231 in the secure element 230 of the individual's electronic identity document 201.

According to an embodiment, a configuration state of the secure element 230 is changed once the machine learning model has been correctly provisioned in the secure element. The aim of changing the configuration state of the secure element is to forbid any additional update of the machine learning model. For example, the electronic identity document implements a one-time programmable memory (OTP) for that purpose.

**Figure 3** illustrates the individual authentication phase that is carried out in an authentication system based on the use of an electronic identity document with an embedded machine learning model.

During the individual authentication phase 102, an individual 310 can use his personalized electronic identity document 301 to be properly identified. For that purpose, an acquisition system 313 can be used to collect and/or capture a set of information 302 related to the individual. This acquisition system 313 can be operated by an operator 311. This set of information 302 is called authentication input dataset.

The authentication input dataset 302 is a set of data items captured and/or collected by the acquisition system 313 from an individual 310.

These data items correspond for example to one or several of the following information: one or several digital images of the 310 individual, sound recordings corresponding for example to the voice of the individual 310, any other information associated to the individual to be authenticated in order to build a authentication input dataset 302.

According to an embodiment, the acquisition system 313 generates a unique request identifier. This unique request identifier can be randomly generated or time based.

Then, the authentication input dataset 302 and possibly the unique request identifier are submitted 320 together to the secure element 330 embedded in the individual's electronic identity document 301.

The secure element 330 evaluates the authentication input dataset by performing inference 331 of the machine learning model 332 stored in the secure element's memory.

This inference computation 332 produces an authentication result. According to an embodiment, this authentication result can be limited to two outcomes corresponding for example to:
- positive authentication of the individual;
- negative authentication of the individual.

According to an embodiment, as an alternative or in complement, a level of confidence estimated for the authentication attempt and/or other additional information related to the authentication process carried out by the inference engine using the machine learning model can be provided as authentication results.

According to an embodiment, the secure element 230, 330, can be configured to generate an electronic signature.

An electronic signature is a digest of a message characterising the data with a low risk of error in view of the level of a required integrity level.

The electronic signature may be obtained by using a check sum calculated from the message itself as the signing algorithm, for example parity or a CRC (Cyclic Redundancy Code).

Alternatively, the electronic signature may be of the cryptographic type, an image of the message obtained by using a signing algorithm such as MD5 (Message Digest 5), SHA-1 (Secure Hash Algorithm 1), SHA-256 (Secure Hash Algorithm 256) or SHA-512 (Secure Hash Algorithm 512).

The electronic signature may also be an authenticated digest, that is to say a cryptographic digest that takes account of a secret element, in addition to the data of which it is a check sum. For example, the authenticated digest may be of the HMAC type (keyed-Hash Message Authentication Code). That authenticated digest is calculated using a cryptographic hashing function in combination with a secret key.

RSA (Rivest Shamir Adleman) or DSA (Digital Signature Algorithm) may also be used as a signing algorithm to generate the electronic signature.

Here, the electronic signature can be generated by the secure element 330 using as an input one or several of the following dataset:
- the authentication input dataset;
- a computation derived from the authentication input dataset, using for instance the result of a cryptographic hash function computation;
- the unique request identifier;
- the inference authentication result.

The purpose of adding an electronic signature to the response is to make sure that a trusted secure element has perform the authentication.

This signed response is returned 303 to the operator 311 of the acquisition system 313, using for example a terminal with a display 304 or a human-to-machine interface integrated in the supervision system. The electronic signature is verified and it is then checked if the input authentication dataset transmitted 302 and received 303 by the supervision system are matching.

The purpose of verifying the authentication input dataset or a derivation of this dataset is to mitigate Man in the Middle Attack.

According to an embodiment, it is also verified that the received and transmitted unique request identifier is matching. The purpose of the unique request identifier is to mitigate replay attacks.

Then, if the inference authentication result is positive, the authentication success is confirmed, and whenever relevant when the unique request identifier and the electronic signature are verified.

Advantageously, the machine learning model stored in the secure element of the electronic identity document can be based on several identification factors for enabling multimodal authentication and not only on face pictures. This makes the authentication process more accurate. For example, a full 3D scan of the individual or a mix of visual, sound, smelling and any indirect biometric information can be considered using the described technology.

As underlined, one important aspect of the invention is that the machine learning model stored inside a given secure element of an electronic identity document is unique to an individual, meaning that any authentication input dataset is evaluated in view of a single individual who is the legitimate owner of the electronic identity document. Advantageously, it allows to have a more accurate identification taking into account only the most relevant parameters for each owner of a document.

In case the machine learning model is a neural network, data stored by the secure element of a given electronic identity document corresponds to a set of weights. According to an embodiment, the machine learning model is trained using for example pictures or voice recordings. Then, these inputs allows to obtain a set of weights used by the secure element to configure the neural network. As this is not possible to understand how a neural network is thinking, the stored weights are uninterpretable. Advantageously, privacy issues are avoided as no sensible or readable data are stored. Neural networks are provided here as examples. Other types of machine learning models such as a decision tree model can also be advantageously used in the context of this invention, providing a similar improvement in term of data privacy protection.

As the electronic identity document is able to perform the authentication process by itself, it is possible to limit the quantity of data provided at the outside or the electronic identity document. This allows avoiding leaks about the identity stored. Advantageously, a potential attacker is not able to spoof the identity of the owner by reading and analysing the outgoing data.

## Claims

1. An electronic identity document (301) comprising a non-removable secure enclave (330) implementing an inference engine (331) and a machine learning model (332), the inference engine (331) being configured to cooperate with the machine learning model (332) for authenticating a first individual called legitimate individual uniquely associated to the electronic identity document (301), the machine learning model (332) being trained using a trusted dataset representative of at least one attribute of the legitimate person before being provisioned in the secure enclave (330) for binding the electronic identity document (301) with the legitimate individual, the secure enclave (330) being further configured to receive an authentication input dataset representative of at least one attribute provided by a second individual, the authentication input dataset being used as an input by the secure enclave (330) to provide as an output at least one data item comprising the result of an authentication process carried out by applying the inference engine (331) and the machine learning model (332) to the authentication input dataset.

2. The electronic identity document (301) according to claim 1, wherein the trusted dataset and the authentication input dataset comprise data representative of at least a biometric attribute belonging respectively to the first and second individuals.

3. The electronic identity document (301) according to any of the preceding claims, wherein the machine learning model (332) is trained using a trusted dataset provided by an acquisition system (202) adapted to capture and/or collect data representative to at least one attribute of the legitimate individual.

4. The electronic identity document (301) according to any of the preceding claims, wherein the secure enclave comprises a one-time programmable memory defining a state, this state being changed once the machine learning model is provisioned in the secure enclave (330).

5. The electronic identity document (301) according to any of the preceding claims, wherein the trusted dataset comprise at least one data item corresponding to one or several of the following information: one or digital images of the legitimate individual or sound recordings corresponding to the voice of the legitimate individual.

6. The electronic identity document (301) according to any of the preceding claims, configured to receive (222) from a personalization centre (200) a machine learning model (204) trained with a trusted dataset of the legitimate user, said machine learning model being received together with a unique request identifier generated by the personalization centre (200), said unique request identifier being later provided as an output together with the data item comprising the result of an authentication process, a supervision system being adapted to compare the unique request identifier generated by the personalization centre (200) and the unique request identifier transmitted by the electronic identity document together with the authentication result.

7. The electronic identity document (301) according to any of the preceding claims, wherein the secure enclave (330) is configure to generate an electronic signature to be transmitted together with the the result of an authentication process to a supervision system, the authentication being considered successful if the authentication result is positive and if the electronic signature is correctly verified by the supervision system.

8. The electronic identity document (301) according to claims 6 and 7, wherein the electronic signature is generated by the secure enclave (330) using as an input one or several of the following dataset:
- the authentication input dataset;
- a computation derived from the authentication input dataset;
- the unique request identifier;
- the inference authentication result.

9. The electronic identity document (301) according to any of the preceding claims, wherein the secure enclave (330) is a secure element.

10. The electronic identity document (301) according to any of the preceding claims, wherein the machine learning model is trained using several different authentication factors for enabling multimodal authentication.

11. The electronic identity document (301) according to any of the preceding claims, wherein the machine learning model is a neural network.

12. The electronic identity document (301) according to claim 11, wherein the information transmitted by the personalization centre (200) to the secure enclave (330) corresponds to a set of weight allowing to configure the neural network.

13. A secure enclave (330) adapted to be installed as a non-removable secure enclave of an electronic identity document (301), said secure enclave (330) comprising an inference engine (331) and a machine learning model (332), the inference engine (331) being configured to cooperate with the machine learning model (332) for authenticating a first individual called legitimate individual uniquely associated to the electronic identity document (301), the machine learning model (332) being trained using a trusted dataset representative of at least one attribute of the legitimate person before being provisioned in the secure enclave (330) for binding the electronic identity document (301) with the legitimate individual, the secure enclave (330) being further configured to receive an authentication input dataset representative of at least one attribute provided by a second individual, the authentication input dataset being used as an input by the secure enclave (330) to provide as an output at least one data item comprising the result of an authentication process carried out applying the inference engine (331) and the machine learning model (332) to the authentication input dataset.
